# EUROPÄISCHE PATENTSCHRIFT

(11) **EP 0 528 127 B1**
(45) Veröffentlichungstag und Bekanntmachung des Hinweises auf die Patenterteilung: **09.10.1996**
(21) Anmeldenummer: 92109408.2
(22) Anmeldetag: 03.06.1992
(51) Int. Cl.: F21V 8/00, F21Q 3/00

(54) **Beleuchtungskörper, insbesondere Unterflurleuchte**
Light fixture, in particulier flush mounted in the ground
Dispositif d'éclairage, en particulier encastré dans le sol

(30) Priorität: 09.08.1991 DE 4126459
(43) Veröffentlichungstag der Anmeldung: 24.02.1993
(73) Patentinhaber: AQUA SIGNAL AKTIENGESELLSCHAFT, D-28307 Bremen (DE)
(72) Erfinder: Rohlfing, Ralph, W-2803 Weyhe 1 (DE)
(74) Vertreter: Meissner & Bolte Patentanwälte

(56) Entgegenhaltungen:
- EP-A- 0 233 001
- US-A- 3 155 321
- US-A- 3 331 956

## Beschreibung

Die Erfindung betrifft einen Beleuchtungskörper, insbesondere eine Unterflurleuchte mit einem Gehäuse, welches durch eine wenigstens teilweise lichtdurchlässige Abdeckung verschließbar ist und mit einem Lichtleitkabel, welches wenigstens mit einer Stirnfläche in das Gehäuse geführt ist.

Seit geraumer Zeit werden Lichtleiter dazu verwendet, Lichtstrahlung auch über größere Entfernungen nahezu verlustfrei von einer Lichtquelle zu einem gewünschten Ort zu führen, der beleuchtet werden soll. Schon in der US-A-1 378 885 wird vorgeschlagen, Beleuchtungskörper an Fahrzeugen hinsichtlich ihrer Funktionsfähigkeit zu überwachen, indem das in den Beleuchtungskörpern ausgestrahlte Licht über Lichtleiter auf Reflexionsbasis zur Bedienungskonsole im Fahrerraum geleitet wird.

Durch die Entwicklung der Faseroptik ergeben sich neue Möglichkeiten. So wird in der US-A-3 641 332 ein Lichtleitersystem beschrieben, das insbesondere in der Medizintechnik Anwendung finden soll. Licht aus einer Quecksilber-Halogenlampe, aus welchem der Infrarot-Anteil ausgefiltert wird, wird durch eine Kunststoffaser geleitet, die von einer Hülle umgeben ist, deren Brechungsindex geringer ist als der des Kunststoffmaterials. Durch Totalreflexion wird erreicht, daß der Lichtstrahl an der Grenzfläche zum umgebenden Medium immer wieder nahezu verlustfrei in die Kunststoffaser zurückreflektiert wird. Die flexible Faser kann dann auf die gewünschte Stelle gerichtet werden und diese über ihre Stirnfläche ausleuchten.

Lichtleitersysteme haben den weiteren Vorteil, daß eine gemeinsame Lichtquelle verwendet werden kann, um Licht in eine Vielzahl von Lichtleitern einzuspeisen. Gemäß der US-A-4 302 069 ist vorgesehen, ein Gebäude mit einer Vielzahl von Räumen mittels Lichtleitern von einer gemeinsamen Lichtquelle aus zu beleuchten, wobei entweder künstliche oder natürliche Lichtquellen zum Einsatz kommen. Zum Aufspalten des Lichtes aus der Lichtquelle in einzelne Strahlen, die in die entsprechenden Lichtleiter gerichtet sind, werden entsprechend angeordnete Reflektoren verwendet. Auch die EP-A-0 224 448 verwendet ein ähnliches Lichtleitersystem, das außer in Gebäuden ähnlich wie bei der US-A-1 378 855 bei Fahrzeugen eingesetzt werden soll, nun aber auch hier zu Beleuchtungszwecken.

Ein Beleuchtungskörper ist auch aus der DE-A-3 434 536 bekannt. Er wird in einem Lichtleitersystem für Kraftfahrzeugrückleuchtgruppen verwendet, wobei ein Leuchtkörper mit einer lichtdurchlässigen Abdeckung versehen ist, die lichtbrechende und lichtreflektierende Einschlüsse enthält. Ein rohr- oder schlauchförmiger Lichtleiter ist auf einen Zapfen aufgesteckt. Gegenüber diesem Anschluß befindet sich ein konusartiger Spiegel, der für eine zeitliche Verteilung des vom Lichtleiter herangeführten Lichtes sorgt. Falls zylinderförmige Lichtleiter bevorzugt werden, können diese in einen flanschartigen Rohrabschnitt des Gehäuses eingesetzt werden.

Besondere Probleme treten auf, wenn solche Beleuchtungskörper als Unterflurleuchten verwendet werden sollen. Diese werden beispielsweise im Straßenbau verwendet. Bekannt sind dabei in den Straßenbelag eingegossene Beleuchtungskörper, die beispielsweise mit Halogenleuchtmitteln bestückt werden. Aufgrund der erheblichen Belastungen durch den Schwerguttransportverkehr kommt es jedoch zu häufigen Ausfällen der Leuchtmittel. Dies hat zur Folge, daß die betroffenen Straßen abgesperrt werden müssen, um die Leuchte zu öffnen und dann die defekten Leuchtmittel auszutauschen. Dies führt zu erheblichen Beeinträchtigungen des Straßenverkehrs, wobei der angestrebte kontinuierliche Verkehrsfluß nicht aufrechterhalten werden kann. Da zukünftig optische Lichtleitsysteme vermehrt eingesetzt werden sollen, um zusätzlich zu einer Beschilderung den Verkehrsfluß zu leiten, wächst die Notwendigkeit, einen möglichst störunanfälligen Beleuchtungskörper zur Verfügung zu haben, der als Unterflurleuchte auch unter höchsten mechanischen Belastungen funktionsfähig bleibt.

Aus der US-A-3 331 956 ist eine Unterflurleuchte bekannt, bei der Licht aus einer Lichtquelle über einen Lichtleiter bis in den Bereich eines Lichtaustritts geführt wird. Eine gezielte Lichtführung, etwa durch ein Prisma oder dergleichen, ist nicht vorgesehen.

Ausgehend von der zuletzt genannten Gattung ist es Aufgabe der Erfindung, einen wartungsarmen, möglichst kompakten Beleuchtungskörper, insbesondere eine Unterflurleuchte, zu schaffen, der auch unter ungünstigen Umweltbedingungen, seien sie mechanischer oder klimatischer Art, zuverlässig betrieben werden kann.

Diese Aufgabe wird mit den kennzeichnenden Merkmalen des Anspruchs 1 gelöst. Vorteilhafte Ausgestaltungen sind Gegenstand der Unteransprüche.

Erfindungsgemäß umfaßt die Umlenkeinrichtung ein federnd aufgehängtes Prisma, wobei die Federkraft so gerichtet ist, daß das Lichtleitkabel mit seiner Stirnfläche in Kontakt mit einer der Flächen des Prismas ist. Damit wird erreicht, daß das Lichtleitkabel immer im innigen Kontakt mit der Umlenkeinrichtung ist, so daß auch bei Erschütterungen oder dergleichen keine Unterbrechung des Lichtflusses auftreten kann. Gleichzeitig ist eine sehr kompakte Ausgestaltung des Beleuchtungskörpers möglich. Das Lichtleitkabel kann beispielsweise durch die Bodenfläche des Gehäuses eingeführt werden, wobei durch den direkten Kontakt mit der Umlenkeinrichtung eine minimale Bauhöhe des Beleuchtungskörpers möglich wird, der praktisch nur durch die Abmessungen der Umlenkeinrichtung festgelegt ist.

Nach einer bevorzugten Ausführungsform der Erfindung ist zum Festlegen des Lichtleitkabels in Gehäuse eine Einschnappverbindung vorgesehen. Damit wird sichergestellt, daß das Lichtleitkabel lösbar festgelegt werden kann, so daß insbesondere vermieden wird, daß es beim Entfernen des Lichtleitkabels zu Schäden an der Umlenkeinrichtung, also am Prisma, kommt.

Es kann das Prisma beispielweise ein rechtwinkliges Prisma sein, dessen Grundfläche als Reflexionsfläche für den umzulenkenden Lichtstrahl dient.

Vorteilhaft ist weiterhin die Abdeckung teilweise lichtundurchlässig, wobei das Prisma von dem lichtunduchlässigen Bereich überdeckt ist. Die eigentliche Abstrahlfläche des Lichtes kann damit je nach den Erfordernissen gestaltet werden, ohne daß die Umlenkeinrichtung bzw. das Prisma diese hinsichtlich der Formgebung beeinflußt.

Um den lichtdurchlässigen Bereich der Abdeckung optimal auszuleuchten, kann Lichtstrom abwärts des Prismas ein Diffusersystem vorgesehen sein, das beispielweise aus Linsen oder anderen für diesen Zweck geeigneten optischen Elementen aufgebaut ist.

Das Eindringen von Wasser in das Innere des Beleuchtungskörpers wird besser verhindert, wenn zwischen Gehäuse und Abdeckung eine Dichtung vorgesehen ist.

Soll der Beleuchtungskörper als Unterflurleuchte in Verkehrsleitsystemen eingesetzt werden, wird vorteilhaft eine Vielzahl dieser Leuchten aus einer gemeinsamen Lichtquelle gespeist. Dazu ist es zweckmäßig, die Lichtleitkabel in Bündeln zu der jeweiligen Lichtquelle zu führen. Im Sinne eines kompakten Faserbündels werden die Querschnitte der Lichtleitkabel dabei dreieckförmig, quadratisch oder hexagonal, also "parkettierbar" gewählt, wobei sich die hexagonale Ausgestaltung der Einzelkabel als optimal erwiesen hat, um bei kleinsten Dämpfungswerten die größtmögliche Lichtdurchlässigkeit zu erzielen. Dabei muß auch der Durchmesser der einzelnen Kabel in Betracht gezogen werden, um eine hinreichende Flexibilität zu ermöglichen, wobei jedoch zulässige Biegeradien nicht überschritten werden dürfen.

Im folgenden soll die Erfindung lediglich beispielhaft anhand der beigefügten Zeichnungen näher beschrieben werden. Es zeigt:
- Figur 1: eine Querschnittsansicht eine Ausführungsform des erfindungsgemäßen Beleuchtungskörpers
- Figur 2: eine Draufsicht auf den Beleuchtungskörper der Figur 1; und
- Figur 3: eine Ansicht des Beleuchtungskörpers von vorn.

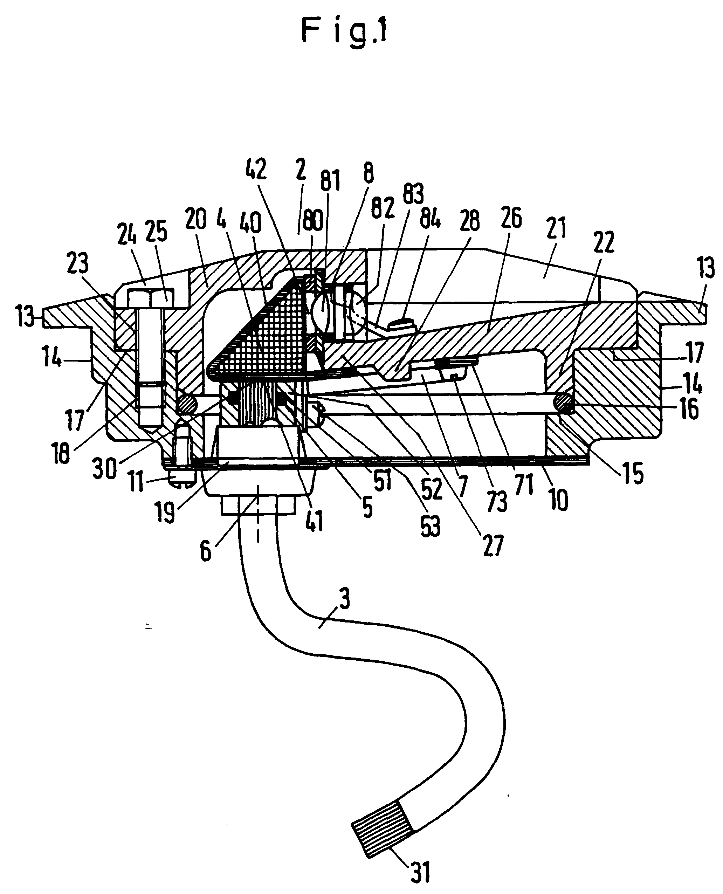

Figur 1 zeigt eine Querschnittsansicht einer bevorzugten Ausführungsform des erfindungsgemäßen Beleuchtungskörpers, der als Unterflurleuchte ausgestaltet ist. Ein im wesentlichen zylinderförmiges Gehäuse 1, beispielsweise aus Edelstahlguß, ist mit einer Bodenplatte 10 verschlossen, welche durch eine Anzahl von Schrauben 11, von denen nur eine dargestellt ist, lösbar an den Seitenwänden des Gehäuses 1 angebracht ist. Oberhalb der Bodenplatte 10 erstrecken sich die Seitenwände des Gehäuses radial nach außen, um dann einen vertikal zur Bodenplatte verlaufenden Abschnitt 12 zu bilden. An seiner Oberkante weist das Gehäuse 1 einen ringförmigen umlaufenden Flansch 13 auf, dessen Oberseite leicht angeschrägt ist, so daß sie mit einer Abdeckung 2 für das Gehäuse fluchtet. Am vertikal verlaufenen Abschnitt 12 des Gehäuses 1 können ein oder mehrere Vorsprünge 14 vorgesehen sein, die eine Verdrehsicherung der eingebauten Unterflurleuchte bilden. Im in den Grund eingelassenen Zustand ruht die Unterflurleuchte mit ihrem umlaufenden Flansch 13 auf der Strassendecke, während der übrige Teil des Gehäuses 1 versenkt ist. Die Innenwand des Gehäuses 1 ist stufenförmig gestaltet, wobei auf einer unteren Stufe 15 ein Dichtring 16 angeordnet ist und von einer oberen Stufe 17 eine Vielzahl von Gewindebohrungen 18 sich in die Seitenwand des Gehäuses 1 erstrecken, die zum Festlegen der Abdeckung 2 mittels Schrauben dienen. Die Abdeckung 2 ist in ihren äußeren Konturen an die Gestaltung der Innenwand des Gehäuses 1 angepaßt. Die Abdeckung 2 besteht im wesentlichen aus einem plattenartigen Verschlußteil 20, das auf der oberen Stufe 17 des Gehäuses 1 aufliegt und das zu einem Teil 21 aus transparenten Material, beispielsweise Glas oder Kunststoff, besteht. Ein sich vertikal von der Platte 20 nach unten erstreckender Flansch 22 ist so bemessen, daß er auf die Dichtung 16 drückt, so daß bei aufgeschraubter Abdeckung 2 der Innenraum des Gehäuses vor eindringendem Wasser bzw. Verunreinigungen oder Schmutz geschützt ist. Zum Befestigen der Abdeckung 2 sind eine der Anzahl der Gewindebohrungen 18 entsprechende Anzahl von Bohrungen 23 vorgesehen, die in Ausnehmungen 24 am Umfang der Platte 20 angeordnet sind und durch die Schrauben 25 geführt werden können. Ein Steg 26, der einstückig mit der Abdeckung vorausgebildet ist, ragt in den Innenraum des Gehäuses 1. Er ist vom Umfangsbereich der Platte 20 her leicht abfallend ausgebildet, sein Endbereich 27 liegt parallel zur Unterseite der Platte 20. Der zentrale Bereich der Platte 20 sowie des transparenten Teiles 21 sind plan, die Randbereiche jeweils leicht abgeschrägt. Wie schon zuvor beschrieben, fluchten sie und die Oberseite des umlaufenden Flansches 13 des Gehäuses 1. In der Bodenplatte 10 ist eine Öffnung 19 vorgesehen, deren Durchmesser größer ist als der eines bevorzugt aus Einzelfasern 31 bestehenden Lichtleitkabels 3, welches in das Innere des Gehäuses 1 geführt werden soll. So kann das Lichtleitkabel 3 mit einem Entlastungsschutz 6 versehen sein, welcher auch gleichzeitig dafür sorgt, daß die Öffnung 19 wasserdicht gegenüber der Umgebung geschützt ist. Zum Festlegen des Lichtleitkabels 3 in dem Gehäuse ist eine Einschnappverbindung 5 vorgesehen. Diese besteht aus einem Ring, der um das Lichtleitkabel 3 gelegt ist und in eine Ringnut 51 eingreift, welche in einem rohrförmigen Flansch 52 vorgesehen ist, der mit der Öffnung 19 ausgerichtet ist. Dieser Flansch ist an einem im folgenden genauer zu beschreibenden Systemhalter 7 befestigt. Falls eine zusätzliche Befestigung des Lichtleitkabels erforderlich ist, kann dies mittels einer Klemmschraube 53 geschehen. Im in die Einschnappverbindung 5 eingerastetem Zustand ist die obere Stirnfläche 30 des Lichtleitkabels 3 in etwa parallel zur Bodenplatte 10 des Gehäuses 1 ausgerichtet.

Im Inneren des Gehäuses ist weiterhin ein Umlenkprisma 4 angeordnet, im folgenden einfach als Prisma bezeichnet. Es handelt sich um ein rechtwinkliges Prisma, dessen Grundfläche, d. h. also diejenige Fläche, die dem rechten Winkel gegenüber liegt, als Umlenkfläche 40 verwendet wird. Eine der Seitenflächen 41 ist im wesentlichen parallel zur Bodenplatte 10 und damit parallel zur Stirnfläche 30 des Lichtleitkabels 3 ausgerichtet, die zweite Seitenfläche 42 steht senkrecht dazu. Das Prisma 4 wird ebenfalls von dem Systemhalter 7 getragen. Dazu sind die Außenkanten der Seitenfläche 41, bzw. der Umlenkfläche 40 von je einem Bügel 71 umschlossen, die an dem Steg 26 mittels je einer Schraube 73 befestigt sind. Gegen seitliche Verschwenkungen wird die Bügelanordnung durch einen Vorsprung 28 am Steg 26 gesichert. Die Befestigung des Bügels 71 erfolgt 50, daß dieser eine nach unten, d. h. auf die Bodenplatte 10 zu gerichtete Federkraft ausübt, wodurch die Seitenfläche 41 des Prismas auf die Stirnfläche 30 des Lichtleitkabels 3 gepreßt wird. Die Anordnung der Bügel 71 ist unabhängig von der Befestigung der Einschnappverbindung 5, deren Flansch 52 fest, also unbeweglich, mit dem Systemhalter 7 verbunden ist. Die vertikal stehende Seitenfläche 42 des Prismas wird an einer ringförmigen Stütze 80 geführt, die so angeordnet ist, daß ihre Öffnung den aus dem Prisma 4 austretenden Lichtstrahl durchläßt. Der Lichtstrahl trifft dann auf ein Diffusorsystem 8, das aus Bikonvexlinsen 81, 82 aufgebaut ist, welche im Abstand voneinander zwischen dem Zentralbereich der Platte 20 und dem Endbereich 27 des Steges 26 angeordnet sind. Das Licht tritt dann in den Raum unter den transparenten Teil 21 und wird durch diesen in die Umgebung gestreut. Das Diffusorsystem 8 ist über einem Bügel 83 mittels einer Schraube 84 an dem Steg 26 festgelegt.

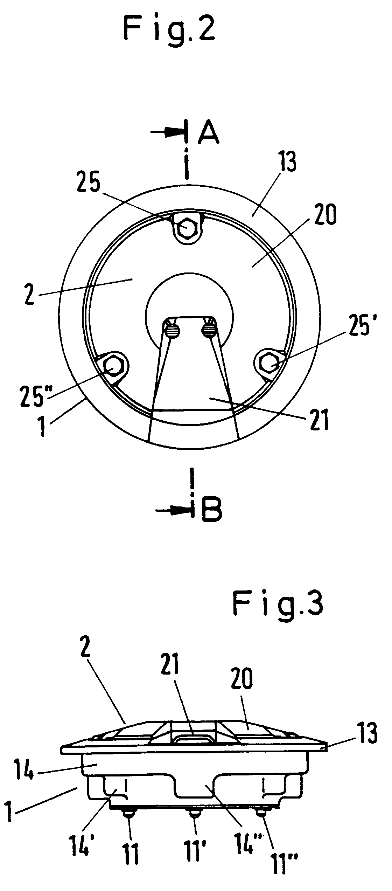

Figur 2 zeigt eine Draufsicht auf den Beleuchtungskörper aus Figur 1. (Es stellt die Ansicht der Figur 1 einen Schnitt längs der Linie A B aus Figur 2 dar). Es ist deutlich zu erkennen, daß die Abdeckung aus Platte 20 und transparentem Teil 21 in das Gehäuse 1 eingelassen ist, wobei das Gehäuse 1 von einem ringförmigen Flansch 13 umgeben ist. Der transparente Teil 21 nimmt einen kreisausschnittsförmigen Teil der Platte 20 ein. Die Abdeckung 2 ist mit drei Schrauben 25, 25', 25'', die im Winkelabstand von etwa 60 ° relativ zueinander am Umfang der Platte 20 angeordnet sind, an dem Gehäuse 1 befestigt. Durch das transparente Teil 21 wird ein optimaler, blendfreier Lichtaustritt gewährleistet. Es kann zusätzlich ein Abschaltsystem für die Lichtzufuhr vorgesehen sein, welches den Beleuchtungskörper bei einer gewissen Distanz des herannahenden Fahrzeuges außer Betrieb setzt, so daß eine Blendung des Fahrers mit Sicherheit verhindert wird.

Figur 3 zeigt eine Seitenansicht des Beleuchtungskörpers, wobei die kompakte Gestaltung besonders deutlich wird. Das Gehäuse 1 kann auf seiner anderen Seite mit Vorsprüngen 14, 14', 14''unterschiedlichster Ausgestaltung versehen sein, um den Beleuchtungskörper im eingebauten Zustand gegen Verdrehen zu sichern. Im eingebaugen Zustand ist das Gehäuse bis zur Unterkante des umlaufenden Flansches 13 in den Boden versenkt, so daß die Abdeckung mit der Platte 20 und dem transparenten Teil 20 sichtbar bleibt. Die Bodenplatte 10 ist mittels dreier Schrauben 11, 11', 11'' am Gehäuse 1 befestigt. Das Lichtleitkabel ist in dieser Zeichnung nicht dargestellt.

Ein besonderer Vorteil bei der erfindungsgemäßen Leuchte ist es, daß der Systemhalter 7 sämtliche im Innern des Gehäuses befindlichen Bauteile zu einer kompletten Montageeinheit verbindet und somit gleichzeitig die problemlose Trennbarkeit aller Baugruppen der Leuchte sicherstellt.

Der Beleuchtungskörper kann, wie schon oben erläutert, im Straßenverkehr eingesetzt werden, aber auch an anderen mechanisch und gegebenenfalls auch chemisch stark beanspruchten Stellen, wie zum Beispiel auf Hubschrauberlandedecks, für Flughafenbefeuerungsanlagen und dergleichen. Es hat erlaubt eine signifikante Kostenreduzierung für den Betreiber, da es praktisch wartungsfrei ist. Das Gehäuse und die Deckung werden absolut wasserdicht gefertigt, so daß Regenwasser, Öle, Fette und Reifenabrieb nicht in das Innere des Gehäuses gelangen können. Die nicht-transparenten Teile bestehen dabei bevorzugt aus einem nicht-rostenden Material, sie sind beispielsweise als Edelstahlgußelemente gestaltet, um eine lange Lebensdauer auch bei extremen täglichen Belastungen zu gewährleisten.

### Bezugszeichenliste

- 1: Gehäuse
- 2: Abdeckung
- 3: Lichtleitkabel
- 4: Umlenkprisma
- 5: Einschnappverbindung
- 6: Entlastungschutz
- 7: Systemhalter
- 8: Diffusorsystem
- 10: Bodenplatte
- 11: Schrauben
- 11': Schrauben
- 11": Schrauben
- 12: Abschnitt vertikal zur Bodenplatte
- 13: ringföhrmiger Flansch
- 14: Vorsprünge
- 14': Vorsprünge
- 14": Vorsprünge
- 15: untere Stufe
- 16: Dichtring
- 17: obere Stufe
- 18: Gewindebohrungen
- 19: Öffnung
- 20: Verschlußteil
- 21: Teil aus transparenten Material
- 22: Flansch
- 23: Bohrungen
- 24: Ausnehmungen
- 25: Schrauben
- 25': Schrauben
- 25": Schrauben
- 26: Steg
- 27: Endbereich des Stegs 2628 Vorsprung
- 30: Stirnfläche
- 31: Einzelfasern
- 40: Umlenkfläche
- 41: Seitenfläche
- 42: Seitenfläche
- 51: Ringnut
- 52: rohrförmiger Flansch
- 53: Klemmschraube
- 71: Bügel
- 73: Schraube
- 80: Stütze
- 81: Bikonvexlinsen
- 82: Bikonvexlinsen
- 83: Bügel
- 84: Schraube

## Patentansprüche

1. Beleuchtungskörper, insbesondere Unterflurleuchte, mit einem Gehäuse (1), welches durch eine wenigstens teilweise lichtdurchlässige Abdeckung (2) verschließbar ist, mit einem Lichtleitkabel (3), welches wenigstens mit einer Stirnfläche (30) in das Gehäuse geführt ist, dadurch gekennzeichnet, daß eine Umlenkeinrichtung für das durch das Lichtleitkabel (3) eingeleitete Licht innerhalb des Gehäuses (1) angeordnet ist und daß die Umlenkeinrichtung ein federnd aufgehängtes Prisma (4) umfaßt, wobei die Federkraft so gerichtet ist, daß das Lichtleitkabel (3) mit seiner Stirnfläche (30) in Kontakt mit einer der Flächen (41) des Prismas (4) ist.

2. Beleuchtungskörper nach Anspruch 1, dadurch gekennzeichnet, daß zum Festlegen des Lichtleitkabels (3) in Gehäuse (1) eine Einschnappverbindung (5) vorgesehen ist.

3. Beleuchtungskörper nach Anspruch 1 oder 2, dadurch gekennzeichnet, daß das Prisma (4) ein rechtwinkliges Prisma ist.

4. Beleuchtungskörper nach einem der Ansprüche 1 bis 3, dadurch gekennzeichnet, daß die Abdeckung (2) teilweise lichtundurchlässig ist, wobei das Prisma (4) von dem lichtundurchlässigen Bereich (20) überdeckt ist.

5. Beleuchtungskörper nach Anspruch 4, dadurch gekennzeichnet, daß lichtstromabwärts das Prisma (4) ein Diffusorsystem (8) vorgesehen ist.

6. Beleuchtungskörper nach einem der Ansprüche 1 bis 5, dadurch gekennzeichnet, daß zwischen Gehäuse (1) und Abdeckung (2) eine Dichtung (16) vorgesehen ist.

7. Beleuchtungskörper nach einem der Ansprüche 1 bis 6, dadurch gekennzeichnet, daß das Lichtleitkabel (3) im Querschnitt drei-eckförmig, quadratisch oder hexagonal ist.

## Claims

1. Illumination body, in particular an underfloor luminaire, having a housing (1) which can be closed by an at least partially translucent covering (2), having a fibre-optic cable (3) which is led into the housing at least with one end face (30), characterized in that a deflecting device for the light introduced through the fibre-optic cable (3) is arranged inside the housing (1), and in that the deflecting device comprises a resiliently suspended prism (4), the spring force being directed such that the end face (30) of the fibre-optic cable (3) is in contact with one of the faces (41) of the prism (4).

2. Illumination body according to Claim 1, characterized in that, in order to fix the fibre-optic cable (3) in housing (1), a snap-in connection (5) is provided.

3. Illumination body according to Claim 1 or 2, characterized in that the prism (4) is a right-angled prism.

4. Illumination body according to one of Claims 1 to 3, characterized in that the covering (2) is partially opaque, the prism (4) being covered over by the opaque portion (20).

5. Illumination body according to Claim 4, characterized in that a diffuser system (8) is provided downstream of the prism (4) in the direction of light.

6. Illumination body according to one of Claims 1 to 5, characterized in that a seal (16) is provided between housing (1) and covering (2).

7. Illumination body according to one of Claims 1 to 6, characterized in that the fibre-optic cable (3) is triangular, square or hexagonal in cross-section.

## Revendications

1. Corps d'illumination, en particulier luminaire encastré, avec un boîtier (1) pouvant être obturé au moyen d'au moins un recouvrement (2) partiellement transparent à la lumière, avec un câble guide-lumière (3), guidé au moins par une face frontale (30) dans le boîtier, caractérisé par le fait qu'un dispositif déviateur pour la lumière introduite par le câble guide-lumière (2) est disposé à l'intérieur du boîtier (1), et que le dispositif déviateur comprend un prisme (4) à suspension élastique, la force élastique étant dirigée de manière que le câble guide-lumière (3) soit, par sa face frontale (3), en contact avec l'une des faces (41) du prisme (4).

2. Corps d'illumination selon la revendication 1, caractérisé par le fait que, pour fixer le câble guide-lumière (3) dans le boîtier (1), est prévue une liaison à encliquetage (5).

3. Corps d'illumination selon la revendication 1 ou 2, caractérisé par le fait que le prisme (4) est un prisme à angle droit.

4. Corps d'illumination selon l'une des revendications 1 à 3, caractérisé par le fait que le recouvrement (2) est partiellement non transparent à la lumière, le prisme (4) étant recouvert par la zone (20) non transparente à la lumière.

5. Corps d'illumination selon la revendication 4, caractérisé par le fait qu'un système diffuseur (8) est prévu, en aval du prisme (4), dans la direction suivie par la lumière.

6. Corps d'illumination selon l'une des revendications 1 à 5, caractérisé par le fait qu'un joint d'étanchéité (16) est prévu entre le boîtier (1) et le recouvrement (2).

7. Corps d'illumination selon l'une des revendications 1 à 6, caractérisé par le fait que le câble guide-lumière (3) est à section transversale triangulaire, quadratique ou hexagonale.
